# FASCICULE DE BREVET EUROPEEN

(11) **EP 3 551 437 B1**
(45) Date de publication et mention de la délivrance du brevet: **07.02.2024**
(21) Numéro de dépôt: 17808519.7
(22) Date de dépôt: 07.12.2017
(51) Int. Cl.: B29C 70/38

(54) **CASSETTE, TETE DE DEPOSE COMPORTANT UNE TELLE CASSETTE, INSTALLATION, PROCEDE DE DRAPAGE, PROCEDE DE RECHARGEMENT ET PROCEDE DE PREPARATION**
KASSETTE, LEGEKOPF MIT SOLCH EINER KASSETTE, AUFLAGEINSTALLATION UND VERFAHREN, NACHFÜLLVERFAHREN UND HERSTELLUNGSVERFAHREN
CASSETTE, LAYING HEAD COMPRISING SUCH A CASSETTE, LAY-UP INSTALLATION AND METHOD, REFILL METHOD AND PREPARATION METHOD

(30) Priorité: 09.12.2016 FR 1662228
(43) Date de publication de la demande: 16.10.2019
(73) Titulaire: Institut de Recherche Technologique Jules Verne, 44340 Bouguenais (FR)
(72) Inventeur: GRILLET, Grégory, 46500 Gramat (FR); KNEVELER, Matthieu, 44840 Les Sorinières (FR)
(74) Mandataire: Cabinet Nony
(86) Numéro de dépôt international: PCT/EP2017/081864
(87) Numéro de publication internationale: WO 2018/104467

(56) Documents cités:
- EP-A1- 2 851 183
- WO-A1-2011/033240
- WO-A2-2013/159137
- FR-A1- 2 919 518
- JP-A- 2004 181 683
- US-A1- 2004 144 473
- US-A1- 2006 054 272
- US-A1- 2015 360 424
- US-B2- 7 137 182

## Description

### Domaine de l'invention

La présente invention concerne le drapage de préformes, notamment sèches, en matériau composite, plus précisément en renfort fibreux pour matériau composite, notamment de type NCF (Non Crimp Fabrics en anglais).

L'invention concerne tout particulièrement une cassette, une tête de dépose comportant une telle cassette, une installation et un procédé pour réaliser un drapage de préforme de manière automatisée, ainsi qu'un procédé de rechargement en cassette et un procédé de préparation de la cassette.

### Art antérieur et inconvénients

On connaît la dépose de préformes composites réalisée à la main par des opérateurs stratifieurs-moulistes. Le métier de stratifieur-mouliste demande des qualités telles que la précision, la minutie et l'adresse. C'est une main d'oeuvre très qualifiée. Ce métier s'exerce dans des ateliers avec des atmosphères chargées de poussières, d'odeurs et de solvants. Le stratifieur-mouliste réalise, à l'unité ou en petites séries, des pièces à base de fibres, de composites ou de résines. L'élaboration du produit fini peut être longue et fastidieuse. L'emploi d'outils coupants et les poussières contraignent le stratifieur-mouliste à porter des équipements de protection individuelle (EPI) adaptés.

La recherche de main d'oeuvre qualifiée est compliquée et nécessite du temps. La sécurité des personnes, la mise aux normes des espaces de travail peuvent avoir un coût élevé en fonction de l'ampleur des ateliers de production. Enfin, le gain de productivité est difficile à atteindre à cause des investissements ainsi nécessaires.

On connaît de EP 2 851 183 un procédé pour appliquer un matériau fibreux sur une surface verticale, comprenant les étapes suivantes : pulvériser un adhésif sur la surface verticale puis appliquer le matériau fibreux sur la surface, pulvériser à nouveau un adhésif sur le matériau fibreux puis appliquer le matériau fibreux, et enfin injecter les couches de matériau fibreux avec une résine. Des moyens de pression supportant un rouleau de matériau fibreux, formant tête de drapage et comprenant un connecteur pour robot sont utilisés pour l'application du matériau fibreux sur la surface verticale.

On connaît encore de FR 2 919 518 un dispositif de changement de bobine pour tête de nappage de préimprégné. La tête de nappage comporte une bobine de stockage de ruban composite, comportant le ruban composite et un support du ruban composite, enroulés ensemble, et une bobine de rembobinage de la partie de support du ruban composite, une fois ce dernier déposé. Les dimensions et la masse de la bobine sont telles qu'il est possible de la changer en approchant un support auxiliaire ne portant pas de bobine et en introduisant des broches d'un côté de l'axe de la bobine afin de faire supporter la bobine par les broches et de la retirer par translation en éloignant le support auxiliaire. Ce système de remplacement de bobine n'est pas possible pour des bobines de grandes dimensions, très lourdes.

Le renfort fibreux de type NCF de base est généralement conditionné sous forme de rouleaux ou bobines de tissu ou bande de largeur maximale de 3200 mm. Il existe différents diamètres d'enroulement pouvant aller jusqu'à 350 mm. Les épaisseurs de plis de base peuvent aller de 0,5 mm à presque 5 mm suivant les applications.

Selon la complexité du tissu, par exemple une ligne directionnelle à 45° avec épaisseur de 0,5 mm, la manipulation du tissu lors de sa mise en place pose des difficultés au stratifieur-mouliste. Le poids et l'encombrement des bobines rendent parfois la mise en oeuvre compliquée. La manutention de bobines de grande largeur est particulièrement compliquée, due à la masse des bobines. En particulier, ces dernières ne peuvent pas être portées d'un seul côté de l'axe de la bobine ou du mandrin.

Or, il peut être nécessaire de changer de bobine après chaque passage, c'est-à-dire après le drapage d'une couche, en particulier pour changer de nature de pli, de nature ou dimensions de tissu. Dans la majorité des cas, il s'avère en effet nécessaire de changer de bobine à chaque pli en raison de la nature multidirectionnelle du renfort fibreux et afin de respecter les règles de symétrie dans la répartition des orientations de plis. Cela nécessite de faciliter et de rendre rapide le changement de bobine pour ne pas immobiliser trop longtemps le robot de drapage pendant ce changement.

On connaît encore du document WO 2011/033240 A1 une cassette d'au moins un renfort fibreux sur un tambour afin de réaliser un drapage comportant : - une structure réceptrice agencée pour recevoir ledit au moins tambour et permettre de la dérouler, - un système de liaison pour la fixation de la cassette à une partie de tête de dépose, elle-même apte à être reliée à un robot de drapage.

Le document JP2004181683 décrit une cassette contenant une bobine de prepreg ainsi qu'une bobine de récupération du film support.

Il existe ainsi un besoin pour fiabiliser la dépose pour le drapage de préformes, notamment en grandes séries. Il existe également un intérêt pour faciliter la réalisation de préformes.

### Cassette

La présente invention a pour objet, selon un premier de ses aspects, une cassette d'au moins un renfort fibreux enroulé en au moins une bobine de tissu afin de réaliser un drapage, pour la fabrication d'une préforme sèche, comportant :
- une structure réceptrice agencée pour recevoir ladite au moins une bobine et permettre de la dérouler,
- un système de liaison pour la fixation amovible de la cassette à un robot de drapage, en particulier à une partie de tête de dépose elle-même apte à être reliée au robot de drapage.

Grâce à l'invention, on dispose d'une cassette, ou porte-bobine, qui sert de dévidoir, qui soit facilement rechargeable en bobine, en désolidarisant la cassette du robot, notamment de la partie de la tête de dépose, à l'aide du système de liaison, puis en la solidarisant à celui-ci, notamment via sa solidarisation à la partie de la tête de dépose, après rechargement en bobine. Cela permet d'automatiser le drapage de préformes, notamment plates et sèches, pour les grandes séries par exemple.

La cassette que l'on désolidarise et celle qu'on solidarise ensuite sont avantageusement différentes, dans un souci de gain de temps. En particulier, la cassette désolidarisée est déposée pour recharge en bobine, tandis que la cassette que l'on solidarise est prise dans un stock en attente, étant déjà chargée en bobine au moment de sa solidarisation.

La structure réceptrice de la cassette peut présenter une surface supérieure configurée pour recevoir un axe de la bobine, notamment une surface supérieure avec des, notamment deux, reliefs en creux, tels que des gorges, pour recevoir des extrémités de l'axe de la bobine ou d'au moins un mandrin portant la bobine. La structure réceptrice est avantageusement prévue pour permettre un remplacement aisé de bobine, par simple soulèvement ou simple positionnement de celle-ci sur la structure réceptrice de la cassette, sans nécessiter un enlèvement de couvercle par exemple. L'axe de la bobine peut être simplement posé sur la structure réceptrice, notamment dans les reliefs en creux. Cependant, dans un mode de réalisation préféré, une retenue mécanique de l'axe de la bobine, notamment via des moyens de centrage et de verrouillage, est prévue au moins à une extrémité de l'axe de la bobine. De tels moyens de centrage et de verrouillage peuvent être mécaniques, comportant par exemple un crochet. Un avantage de la présence de tels moyens est qu'il permet que la bobine soit en référence par rapport à la cassette.

La structure réceptrice peut former un cadre comportant deux montants latéraux reliés entre eux par au moins un montant avant. Les montants latéraux sont de préférence agencés pour recevoir les extrémités de l'axe de la bobine ou d'au moins un mandrin portant la bobine. Les montants latéraux peuvent présenter au moins partiellement ladite surface supérieure, notamment avec les reliefs en creux. Le cadre peut être configuré pour ménager une ouverture centrale, intérieure, entre les montants latéraux et le montant avant, afin de loger la bobine et permettre son déroulement.

Le système de liaison pour la fixation amovible de la cassette peut être configuré pour permettre à la cassette d'être reliée à une partie, notamment supérieure, d'une tête de dépose portée par le robot. Dans ce cas, le système de liaison peut comporter au moins un élément de bridage permettant de brider et/ou de centrer la cassette sur la première partie, notamment supérieure, de la tête de dépose. Le système de liaison peut comporter une pluralité d'éléments de bridage, par exemple disposés sur la surface supérieure de la structure réceptrice de la cassette, notamment des éléments de centrage et de bridage de type pneumatique ou hydraulique. Un intérêt de tels éléments de centrage et bridage est qu'ils sont fiables, en matière de sécurité, pour un coût raisonnable. Ils peuvent fonctionner de manière à ce qu'il faille injecter de l'air ou de l'huile pour déverrouiller le bridage. Ainsi, même en cas de panne d'alimentation électrique, la cassette reste solidaire du robot ou de la partie, notamment supérieure, de la tête de dépose.

La cassette peut comporter un sous-ensemble de support en rotation porté par la structure réceptrice. Un tel sous-ensemble de support en rotation peut être configuré pour reprendre la charge de la bobine. Il peut comporter une pluralité de rouleaux, notamment quatre rouleaux, fixés à la structure réceptrice, montés rotatifs avec un axe de rotation parallèle à l'axe de la bobine. Les rouleaux peuvent être fixés, deux à deux, sur une face intérieure des montants latéraux du cadre de la structure réceptrice, le cas échéant. Les rouleaux peuvent être prévus pour pouvoir être au contact du ou des mandrins, deux à deux. Le sous-ensemble de support en rotation peut également comporter une structure de réglage de telle sorte que, quel que soit le diamètre de la bobine, du mandrin, on puisse obtenir un centrage de la bobine, pour que le robot ait un repère stable.

La cassette peut encore comporter un sous-ensemble de guidage du tissu en renfort fibreux porté par la structure réceptrice et agencé pour guider le tissu lors du déroulement de la bobine. Le sous-ensemble de guidage du tissu peut permettre de recentrer et de maintenir le tissu à la position souhaitée. Il peut garantir également le maintien du tissu en sortie verticale. Le sous-ensemble de guidage du tissu peut comporter au moins un rouleau et/ou au moins une plaque configuré(s) pour diriger le tissu en renfort fibreux lors du déroulement de la bobine. Le ou les rouleaux peuvent être agencés pour rediriger le tissu en fonction du diamètre de la bobine. La ou les plaques peuvent être agencées pour favoriser le guidage. Le sous-ensemble de guidage du tissu peut être fixé sur la structure réceptrice, par exemple en formant ou en étant fixé à un montant arrière du cadre de celle-ci, lequel montant arrière est opposé au montant avant et séparé de celui-ci par l'ouverture centrale pour la bobine.

La cassette peut comporter un sous-ensemble de mesure, configuré pour mesurer la longueur de déroulement de la bobine et/ou pour contrôler la vitesse de défilement du tissu en renfort fibreux. Ledit sous-ensemble de mesure peut comporter au moins un capteur de mesure de la longueur de déroulement de la bobine et/ou un capteur de contrôle de la vitesse de défilement du tissu en renfort fibreux. Un même capteur, par exemple un capteur sans contact de type Doppler ou une roue codeuse appliquée sur le tissu, peut jouer ces deux rôles.

Le tissu est de préférence multidirectionnel. Dans ce cas, il est au moins bidirectionnel, mais peut également être tridimensionnel ou quadridimensionnel.

Le tissu peut être non-tissé, notamment de type Non-Crimp Fabrics (NCF). Dans ce cas, le tissu comporte une pluralité de couches de fibres unidirectionnelles, disposées les unes sur les autres avec une orientation angulaire différente des fibres, formant ainsi un tissu multidirectionnel. En variante, le tissu est tissé, étant alors multidirectionnel. Le tissu peut être déformable, c'est-à-dire composé de fibres continues arrangées selon des directions définies et assemblées sous la forme de tissé ou de non-tissé.

Les fibres constituant le tissu peuvent être choisies dans le groupe constitué par les fibres de carbone, de verre, les fibres d'aramide, les fibres céramiques, les fibres de polyester, les fibres d'origine végétale, notamment les fibres de lin, de préférence les fibres de carbone ou de verre, et un mélange de celles-ci. Les fibres peuvent être continues ou courtes.

Il est possible, pour réaliser le tissu, d'utiliser des fibres non tissées NCF, qui forment une matière première à moindre coût par rapport à des fibres tissées. De plus, on peut choisir l'orientation des fibres pour le drapage, ce qui permet de maîtriser les propriétés mécaniques de la pièce qui sera réalisée à partir de la préforme, voire d'avoir des performances supérieures.

Les dimensions du tissu enroulé en une bobine peuvent être en largeur comprises entre 50mm et 5000mm, notamment 50 mm et 3200mm, en particulier entre 1270 mm et 3200 mm. La largeur du tissu de la bobine est ainsi avantageusement grande afin d'avoir des fibres longues. Les dimensions du tissu enroulé en une bobine peuvent être, en longueur, comprises entre 500mm et 50000mm.

La cassette peut être dimensionnée de manière à permettre de loger et dérouler la bobine, en fonction de ses dimensions. Avantageusement, le robot sera adapté pour pouvoir manipuler la charge générée et/ou le dimensionnement de la cassette et de la bobine sera fonction de la capacité du robot.

Le tissu est choisi de manière à permettre de réaliser, par drapage de celui-ci, une préforme sèche. Par « préforme sèche », on désigne une préforme fibreuse comprenant moins de 20% environ, notamment moins de 5 % environ, d'un polymère thermodurcissable ou thermoplastique, en pourcentage massique par rapport à la masse totale de la préforme. Il est à noter que la préforme pourra comporter plusieurs couches, séparées ou non entre elles d'un ou plusieurs inserts, par exemple en mousse, notamment en mousse de PET (polyéthylène téréphtalate) ou en tissu unidirectionnel de carbone, reliées entre elles ou non par une ou plusieurs coutures. La préforme sèche pourra être utilisée comme phase de renfort d'un renfort fibreux. La préforme pourra être drapée à plat. La préforme pourra ensuite être déplacée pour être thermoformée et/ou être imprégnée par au moins un polymère, dans un moule, pour former une pièce finale. La pièce finale pourra être obtenue par l'imprégnation, notamment l'injection ou l'infusion, d'un polymère à l'état liquide ou pâteux dans ladite préforme sèche, de manière à former une pièce en matériau composite.

### Tête de dépose

Selon un autre de ses aspects, l'invention a encore pour objet, en combinaison avec ce qui précède, une tête de dépose pour le drapage d'au moins un renfort fibreux enroulé sous forme de tissu en au moins une bobine, comportant :
- une première partie, notamment supérieure, de tête de dépose,
- une cassette telle que définie précédemment, disposée dans une deuxième partie, notamment inférieure, de la tête de dépose, et reliée par le système de liaison à la première partie, notamment supérieure, de tête de dépose,
- des moyens de connexion au robot.

La première partie, notamment supérieure, de la tête de dépose comporte avantageusement des moyens de bridage complémentaires pour la fixation amovible audit système de liaison de la cassette.

La tête, et en particulier la première partie, notamment supérieure, de la tête, peut être prévue pour assurer le défilement et la découpe du tissu, réaliser la dépose d'un adhésif et maintenir la cassette. En variante, tout ou partie de ces fonctions, et les caractéristiques techniques correspondantes décrites ci-après, peuvent être intégrées à la cassette. Avantageusement, la tête intègre une majorité des fonctions. Grâce à l'invention, seule la cassette est chargée à chaque changement de bobine et non la tête entière. Comme les changements de cassette sont fréquents pour l'utilisation visée, en particulier après chaque drapage d'un pli, le gain de temps et de coût généré est appréciable dans le cadre de l'industrialisation.

La tête de dépose, et en particulier la première partie, notamment supérieure, de la tête - ou, dans une variante, la cassette - peut comporter au moins un élément choisi dans le groupe constitué par un système d'entraînement en rotation de la bobine, un système de découpe de la bobine, un élément presseur et un système de dépose d'un adhésif.

Lorsque la tête de dépose comporte un système de découpe de la bobine, celui-ci permet de découper le tissu de la bobine à la longueur désirée. On peut ainsi réaliser une coupe propre pour faire par exemple un départ à zéro. Cette opération peut être réalisée au-dessus d'un réceptacle de déchets.

Le système de dépose d'un adhésif de la tête de dépose, lorsque présent, peut être prévu pour permettre de déposer un adhésif, notamment une colle ou un ruban double face sur le tissu en renfort fibreux ou sur le support pour le drapage, avant, pendant ou après le drapage, de préférence au moins avant le drapage.

Le système d'entraînement en rotation de la bobine est configuré pour assurer la rotation de la bobine afin de provoquer le déroulement du tissu en renfort fibreux. Il peut être apte à gérer la vitesse de sortie du tissu et à assurer son immobilisation lorsque cela est nécessaire. Il peut comporter un moteur d'entraînement et une roue entraînée en rotation par le moteur d'entraînement, la roue étant reliée à l'axe de la bobine de manière à entraîner celle-ci en rotation, notamment étant reliée par friction à au moins un mandrin.

L'élément presseur, lorsque présent sur la tête de dépose, permet de retenir le tissu pendant la découpe de celui-ci et de maîtriser la fin de la dépose d'un lé de tissu. Il peut comporter au moins une plaque et au moins un vérin pour le pressage de la plaque contre le tissu.

Les moyens de connexion au robot peuvent permettre une liaison fixe de la tête au robot. Dans ce cas, les moyens de connexion peuvent comprendre des vis ou assimilés. En variante, la liaison peut être amovible, les moyens de connexion comportant alors, par exemple, des éléments de bridage de type pneumatique ou hydraulique, à l'instar du système de liaison de la cassette.

### Installation de drapage

L'invention a également pour objet, selon un autre de ses aspects, indépendamment ou en combinaison avec ce qui précède, une installation pour le drapage de préformes sèches, en renfort fibreux sur un support de dépose, l'installation comportant au moins un robot portant une tête de dépose telle que définie plus haut et/ou portant une cassette d'au moins un renfort fibreux enroulé en au moins une bobine, notamment une cassette telle que définie plus haut.

L'installation de drapage peut comporter une traverse de support du robot montée sur un banc pour permettre un déplacement du robot, selon un axe longitudinal parallèle à une direction de drapage. La traverse est avantageusement apte à se déplacer au-dessus du support de dépose à l'aide du banc sur lequel elle repose et par rapport auquel elle peut se déplacer selon un axe longitudinal parallèle à la direction de drapage. Le robot peut ainsi se déplacer au-dessus du support de dépose afin de réaliser le drapage pour fabriquer la préforme.

L'installation de drapage peut comporter au moins un espace de stockage accessible au robot, le ou chaque espace de stockage comportant au moins deux zones pour recevoir chacune une cassette, notamment une zone pour recevoir une cassette chargée d'une bobine en attente et une zone formant un espace vide pour recevoir une cassette à recharger ou à mettre en attente. L'espace de stockage peut encore comporter dans chaque zone un berceau de support pour recevoir une cassette. La présence de l'espace de stockage permet à l'opérateur de préparer au moins une cassette parallèlement à l'opération de drapage, ce qui permet de gagner du temps de production de préforme. L'espace de stockage, accessible et de préférence formant repère spatial pour le robot, permet à ce dernier de se décharger d'une cassette vide ou inadaptée et de se charger d'une cassette portant une bobine adéquate.

En variante non préférée, le ou chaque espace de stockage peut être prévu pour recevoir des têtes de dépose et non pas seulement des cassettes, le robot étant configuré pour se décharger et se charger d'une tête de dépose et non pas seulement d'une cassette.

L'installation est avantageusement disposée dans un environnement clos avec aspiration de la poussière. Cela permet alors aux opérateurs de ne pas être équipés d'équipements de protection individuelle spécifiques.

Dans un mode de réalisation particulier, le robot utilisé pour porter la cassette et/ou la tête de dépose comporte un socle, notamment positionné sur la traverse, et un bras mobile selon plusieurs, notamment six, axes de rotation ou degrés de liberté. Cette flexibilité permet au robot d'assurer tout ou partie des fonctions de drapage, d'inclinaison de la tête de dépose, de dépose de l'adhésif, de changement de cassette. Le robot peut être différent sans sortir du cadre de l'invention.

Un deuxième robot peut être prévu, étant par exemple porté et déplaçable en translation sur le banc, de manière par exemple à déposer des inserts ou autres éléments sur le drapage et/ou pour réaliser une ou plusieurs coutures. Ce deuxième robot peut être un robot de type à bras, le robot étant mobile en translation selon l'axe longitudinal sur le banc, le bras étant de préférence mobile à six degrés de liberté. Cela peut permettre de réaliser une structure de préforme dite « structure sandwich », qui est une structure formée d'un insert ou âme ou noyau, pris en sandwich entre deux couches extérieures d'un ou de plusieurs autres matériaux. Le noyau peut être léger et présenter, en lui-même, une faible résistance mécanique, tandis que les couches extérieures peuvent présenter une forte résistance mécanique. L'épaisseur du noyau peut être supérieure à environ dix fois l'épaisseur des couches extérieures.

L'installation peut comporter un support de dépose prévu pour recevoir la préforme formée par drapage lors de la dépose du tissu en renfort fibreux. Un tel support de dépose peut constituer un repère spatial pour le robot. Le support de dépose peut comporter au moins une table fixe portant un cadre de dépose supportant un matelas martyr pour d'éventuelles coutures à réaliser sur la préforme après drapage. Le matelas martyr peut constituer un support pour le tissu, notamment en mousse ou en latex, qui maintient le tissu à la bonne hauteur, jetable après un certain nombre de cycles car transpercé par les aiguilles lors de la réalisation des coutures. Le support de dépose peut en outre comporter des anneaux de levage, des fixations pour le bridage des tables et/ou des moyens de centrage pour la mise en position du cadre de dépose sur la table.

L'invention a également pour objet, selon un autre de ses aspects, indépendamment ou en combinaison, même partielle, avec ce qui précède, une installation pour le drapage de préformes sèches, en renfort fibreux sur un support de dépose, l'installation comportant :
- au moins un robot portant une cassette d'au moins un renfort fibreux enroulé en au moins une bobine, la cassette comportant une structure réceptrice agencée pour recevoir ladite au moins une bobine et permettre de la dérouler, et
- au moins un espace de stockage accessible au robot, le ou chaque espace de stockage comportant au moins deux zones pour recevoir chacune une cassette.

L'espace de stockage peut être tel que défini plus haut.

Dans ce cas, la cassette ne comporte pas nécessairement de système de liaison tel que défini plus haut. Le robot peut alors comporter des moyens de préhension de la cassette.

### Procédé de drapage

L'invention a encore pour objet, selon un autre de ses aspects, en combinaison avec ce qui précède, un procédé de drapage, notamment à plat, d'une préforme sèche, en renfort fibreux sur un support de dépose, à l'aide de l'installation telle que définie précédemment, comportant les étapes suivantes :
- charger le robot avec une cassette portant au moins une bobine de tissu en renfort fibreux,
- commander le robot pour positionner la cassette et/ou la tête de dépose au-dessus du support de dépose,
- déplacer le robot selon une direction de drapage et commander le déroulement simultané de la bobine pour réaliser la préforme.

Grâce à l'invention, le procédé de drapage d'une préforme est automatisé, ce qui permet de gagner en productivité et en fiabilité.

Le drapage de la préforme est avantageusement effectué à plat, sur un outillage plan. En variante, l'outillage peut être incliné ou positionné sur un vireur pour la réalisation de pièces courbes.

Lors de l'étape de chargement, le robot peut venir charger la cassette sous la première partie, notamment supérieure, de la tête de dépose. La cassette est de préférence centrée et maintenue par le système de liaison, par exemple relié aux moyens de bridage complémentaires de la première partie, notamment supérieure, de tête de dépose.

Lorsque la tête de dépose comporte un système de dépose d'un adhésif, le procédé peut comporter l'étape consistant à commander le robot pour déplacer angulairement, notamment par rotation, la tête de dépose pour l'incliner afin de mettre en contact le tissu et l'adhésif. Le procédé peut alors comporter l'étape consistant à commander le robot de manière à déplacer la tête de dépose pour presser le tissu sur l'adhésif. Il est à noter que la position verticale du tissu est généralement la meilleure position pour le défilement de celui-ci. En revanche, cette position peut être gênante au départ, lors de l'enclenchement du défilement. Dans ce cas, la position inclinée peut être préférable.

Un mouvement combiné entre le système d'entraînement en rotation de la bobine et une traverse portant le robot peut être mis en oeuvre de manière à effectuer selon la direction de drapage la course nécessaire pour recouvrir de la préforme le support de dépose.

Le procédé peut comporter l'étape consistant à découper le tissu à l'aide du système de découpe du tissu de la bobine, lorsque présent, afin de mettre à longueur désirée le tissu.

Le robot peut être ensuite utilisé soit pour réaliser un nouveau procédé de drapage sur le même support de dépose ou sur un autre support de dépose, soit pour charger une nouvelle cassette, comme décrit ci-après.

En particulier, le procédé peut comprendre l'étape consistant à charger une nouvelle cassette après drapage de chaque pli et avant drapage du pli suivant. Le changement de bobine et donc de cassette après drapage de chaque pli peut en effet être nécessaire en raison de la nature multidirectionnelle du renfort fibreux et afin de respecter les règles de symétrie dans la répartition des orientations de plis.

Le temps nécessaire pour réaliser une préforme, avec le drapage de plusieurs plis de tissus, l'ajout d'éventuels inserts et coutures, incluant le temps du procédé de drapage selon l'invention peut être le suivant, en fonction du type de la préforme. Il peut être compris entre 2 et 30 min en fonction de la taille et du poids de la préforme. La vitesse de drapage pourra être comprise entre 100mm/s et 1000mm/s, par exemple égale à 300mm/s. Pour une pièce de l'ordre de 15kg, le temps de réalisation de la préforme pourra être compris entre 5 min et 10 min. Pour une pièce de 500 kg, le temps de réalisation de la préforme pourra être compris entre 20 et 30 min.

### Procédé de rechargement

L'invention a également pour objet, selon un autre de ses aspects, en combinaison avec ce qui précède, un procédé de rechargement en cassette à l'aide d'une installation telle que définie plus haut, comportant les étapes consistant à :
- commander le robot portant une première cassette pour décharger celle-ci, notamment à l'aide du système de liaison de la première cassette, et
- commander le robot pour charger une deuxième cassette présente dans l'espace de stockage, notamment à l'aide du système de liaison de la deuxième cassette.

Les temps de manipulation sont ainsi réduits grâce à la possibilité de recharger en cassette en utilisant le robot. Le rechargement en cassette peut être réalisé par exemple parce que la bobine est vidée ou presque vidée, ou parce qu'il y a un besoin pour changer, par exemple à la fin d'un passage, de type ou de dimensions de tissu ou de matériau de renfort fibreux pour poursuivre le drapage. Grâce à l'invention, on peut ainsi changer rapidement de type de tissu ou de bobine (épaisseur, orientations des fibres, dimensions de la bobine, par exemple). Le temps de rechargement d'une cassette est ainsi optimisé et faible par rapport au temps de drapage.

Le robot comporte avantageusement des moyens de commande du système de liaison de la cassette, afin de lui permettre de passer d'une position verrouillée, fixée directement ou indirectement au robot à une position déverrouillée pour le déchargement de la cassette.

Le robot peut comporter des moyens de préhension permettant d'assurer le maintien de la cassette, de préférence sur la partie de la tête de dépose. Dans ce cas, les moyens de liaison de la cassette peuvent uniquement avoir un rôle de centrage de la cassette sur la première partie, notamment supérieure, de la tête de dépose par exemple, et ne comporter que des pions de centrage.

Le robot peut, en variante non préférée, se charger ou se décharger de toute la tête de dépose munie d'une cassette, et non pas seulement de la cassette.

Le changement de cassette peut permettre de changer de type de renfort fibreux dans la bobine. Le procédé de rechargement peut être mis en oeuvre après drapage de chaque pli et avant drapage du pli suivant. Ainsi, une nouvelle bobine et donc cassette est utilisée pour le drapage de chaque pli. Le changement de bobine et donc de cassette après drapage de chaque pli peut en effet être nécessaire en raison de la nature multidirectionnelle du renfort fibreux et afin de respecter les règles de symétrie dans la répartition des orientations de plis.

### Procédé de préparation d'une cassette

L'invention a enfin pour objet, selon un autre de ses aspects, en combinaison avec ce qui précède, un procédé de préparation d'une cassette telle que décrite précédemment, comportant les étapes suivantes :
- positionner au moins une bobine de tissu en renfort fibreux sur la structure réceptrice de la cassette, notamment en manipulant, par exemple simultanément, les deux extrémités d'un axe de la bobine ou de mandrins reçu(e)s sur la structure réceptrice, et
- placer la cassette dans un espace de stockage, notamment sur un berceau de support de la cassette.

Le procédé peut encore comporter l'étape consistant à régler la longueur de renfort fibreux déroulé de la bobine par rapport au sous-ensemble de guidage de tissu, par exemple avant de placer la cassette dans l'espace de stockage. L'opérateur peut ainsi régler le tissu afin que celui-ci puisse sortir de quelques centimètres en partie basse de la cassette.

Le procédé peut encore comporter l'étape consistant à insérer un mandrin, notamment expansible, à chaque extrémité d'un axe d'une bobine de tissu en renfort fibreux, avant de positionner la bobine sur la structure réceptrice. L'opérateur peut insérer des mandrins de part et d'autre de l'axe, généralement en carton, de la bobine. Les mandrins permettent de tenir la bobine et de garantir le placement concentrique du tissu de renfort fibreux de la bobine. Les mandrins disposés de part et d'autre de l'axe de la bobine et reçus par la structure réceptrice de la cassette peuvent être expansés, c'est-à-dire que chaque mandrin est expansé lorsqu'il n'y a plus d'air. Lors du chargement de la bobine sur la cassette, les mandrins expansibles peuvent être positionnés à proximité du sous-ensemble de support en rotation de la bobine, lorsque présent sur la cassette.

Le chargement de la bobine sur la cassette peut être réalisé avec l'aide d'un bras de manutention, compte-tenu du poids de la bobine, de manière connue en soi, à l'aide d'une pince, d'un crochet ou autre.

### Figures

L'invention pourra être mieux comprise à la lecture de la description qui va suivre, d'exemples de mise en oeuvre non limitatifs de celle-ci et à l'examen du dessin annexé, sur lequel :
- la figure 1 représente, de manière schématique et en perspective, un exemple de cassette conforme à l'invention, représentée sans bobine de tissu en renfort fibreux,
- la figure 2 représente de manière isolée, schématique et en perspective, un exemple de système de liaison de la cassette de la figure 1,
- la figure 3 représente de manière isolée, schématique et en perspective, un rouleau d'un sous-ensemble de support en rotation de la cassette de la figure 1,
- la figure 4 représente, de manière schématique et en coupe partielle, le sous-ensemble de guidage du tissu de la cassette de la figure 1,
- la figure 5 représente de manière isolée, schématique et en perspective, un exemple de mandrin expansible pouvant être inséré dans la bobine pour être reçu par la structure réceptrice de la cassette de la figure 1,
- la figure 6 représente, de manière schématique et en perspective en vue de trois quarts avant, un exemple de tête de dépose conforme à l'invention,
- la figure 7 représente, de manière schématique et en perspective, vue de trois quarts arrière, la tête de dépose de la figure 6,
- la figure 8 est une vue similaire à la figure 6, représentant uniquement la partie supérieure de la tête de dépose de la figure 6,
- la figure 9 est une vue similaire à la figure 7, représentant uniquement la partie supérieure de la tête de dépose de la figure 7,
- la figure 10 représente de manière isolée, schématique et en perspective, un système d'entraînement en rotation de la bobine, présent sur la tête de la figure 7,
- la figure 11 représente, de manière schématique en perspective et isolément, un système de découpe de la bobine de la tête de dépose de la figure 6,
- la figure 12 représente de manière isolée, schématique et en perspective, l'élément presseur de la tête de dépose de la figure 6,
- la figure 13 représente, vu en coupe schématique et partielle, l'élément presseur de la figure 12,
- la figure 14 représente schématiquement, en perspective et isolément, le système de dépose d'un adhésif de la tête de dépose de la figure 6,
- la figure 15 représente de manière schématique et en perspective un exemple d'installation conforme à l'invention,
- la figure 16 représente, de manière schématique et en perspective, la traverse de l'installation de la figure 15,
- la figure 17 représente de manière isolée, schématique et en perspective, le robot utilisé pour le drapage dans l'installation de la figure 15,
- la figure 18 représente de manière schématique et en perspective une table formant support pour le drapage dans l'installation de la figure 15, et
- la figure 19 représente, de manière schématique et en perspective, un espace de stockage de cassettes de l'installation de la figure 15.

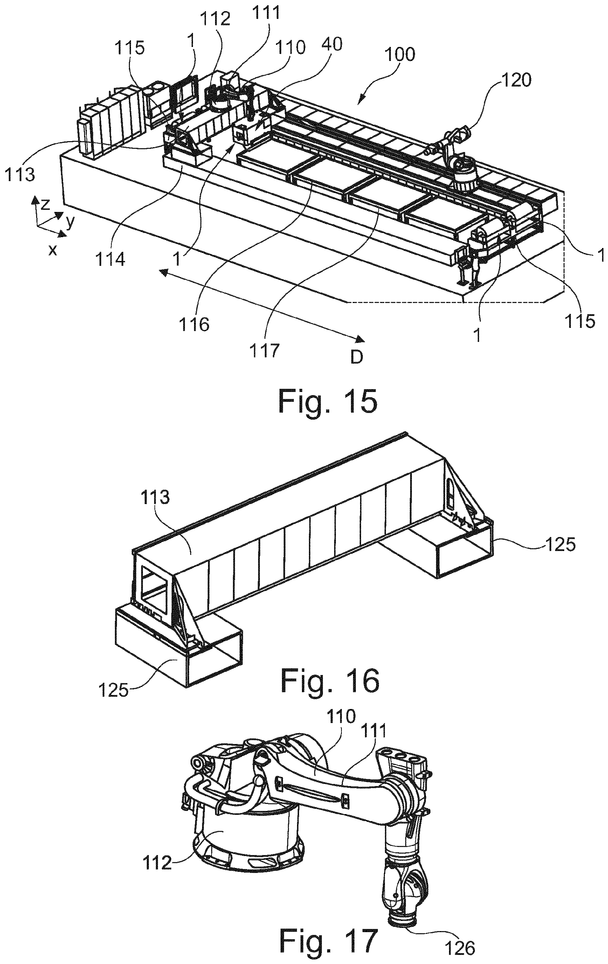

On a représenté sur la figure 15 une installation 100 conforme à un exemple de réalisation de l'invention, comportant une tête de dépose 40 portant une cassette 1 et supportée par un robot 110, lui-même porté par une traverse 113.

La traverse 113 est montée sur un banc 114 et peut se déplacer, au-dessus de la ligne de drapage, selon une direction de drapage D, illustrée par une double flèche, perpendiculaire à l'axe de rotation X de la bobine. La traverse 113 permet de supporter le poids du robot 110 portant la tête de dépose 40 et de déplacer, selon la direction de drapage D, le robot 110, notamment lors de la dépose du tissu, par déplacement sur le banc 114, afin de réaliser une préforme.

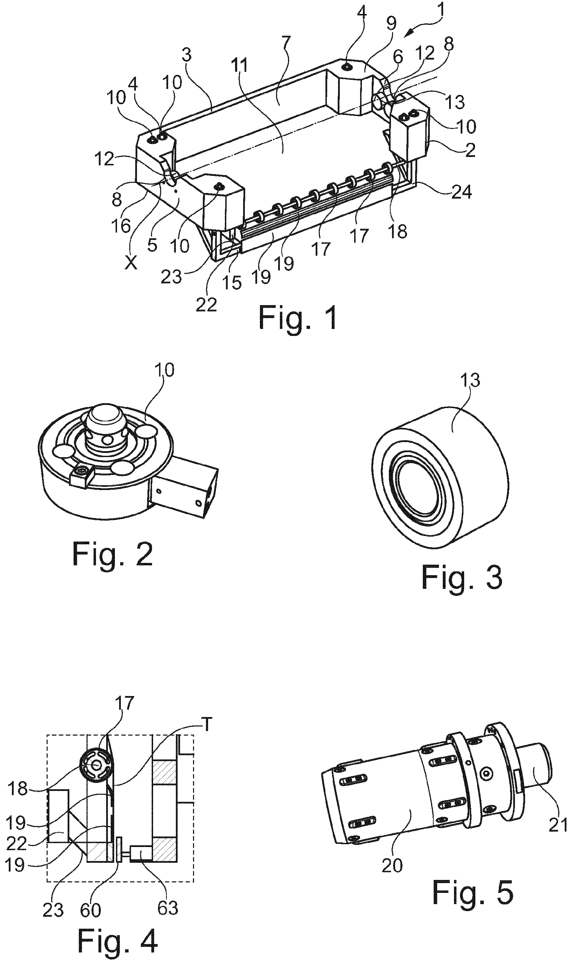

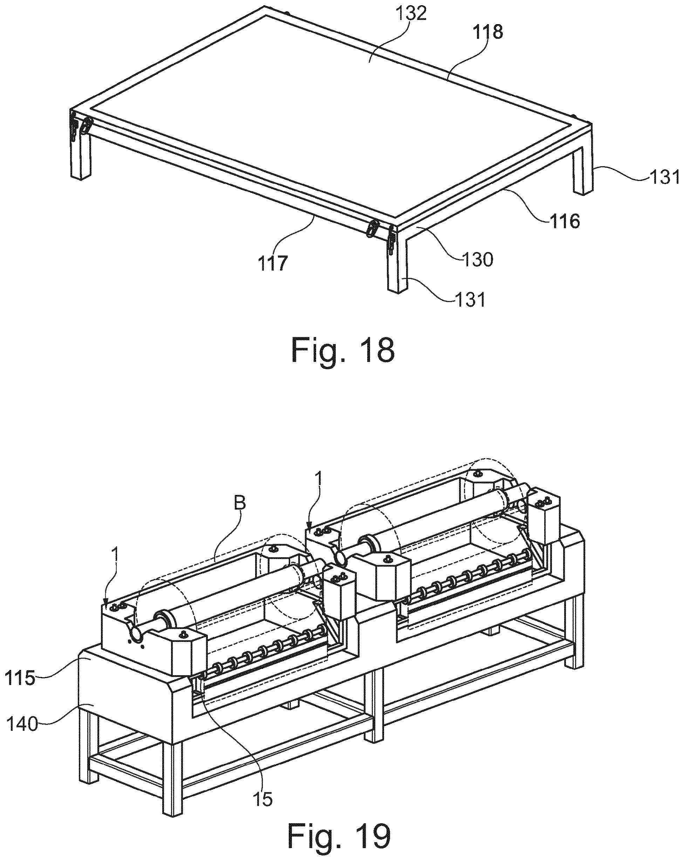

On a représenté isolément, sur la figure 1, la cassette 1 d'un renfort fibreux enroulé sous forme de tissu en une bobine, non illustrée sur cette figure dans un souci de clarté du dessin, pour la fabrication d'une préforme sèche. La cassette 1 munie d'une bobine B est visible par exemple sur la figure 19. La cassette 1 comporte une structure réceptrice 2 agencée pour recevoir la bobine et permettre son déroulement. La cassette 1 comporte en outre un système de liaison 4 prévu pour permettre à la cassette 1 la fixation amovible à un robot afin de réaliser le drapage et d'être déchargée par le robot afin de permettre son remplacement par une autre cassette.

Dans l'exemple illustré, la structure réceptrice 2 comporte un cadre 3 formé de deux montants latéraux 5 et 6, reliés entre eux par un montant avant 7. Les montants latéraux 5 et 6 présentent chacun, sur une surface supérieure 9 de la structure réceptrice 2, un relief en creux formé par une gorge 8, de forme sensiblement semi-circulaire dans cet exemple, pour recevoir une extrémité d'au moins un mandrin ou un axe de la bobine.

La bobine est, dans cet exemple, prévue pour reposer librement avec son axe sur la structure réceptrice 2 de la cassette 1, ce qui permet de faciliter le déchargement et le rechargement en bobine de la cassette 1.

Le montant avant 7 qui relie les montants latéraux 5 et 6 permet de rigidifier l'ensemble. Le cadre 3 est dans cet exemple sensiblement rectangulaire, le montant avant 7 et les montants latéraux 5 et 6 formant trois côtés d'un rectangle et préservant une ouverture centrale 11 pour recevoir la bobine. Le déroulement du tissu de la bobine se fait du côté opposé au montant avant 7, comme cela sera décrit ci-après.

Dans l'exemple considéré, le système de liaison 4 comporte des éléments de bridage 10, visibles de manière isolée sur la figure 2, disposés dans les angles du cadre 3 de la structure réceptrice 2. Ils sont prévus, dans cet exemple, pour permettre la fixation amovible sur une partie, dans cet exemple la partie supérieure, d'une tête de dépose portée par le robot, comme cela sera décrit plus loin.

Par « système de liaison pour la fixation amovible à un robot », on entend ainsi, dans toute la description, que la fixation amovible de la cassette au robot peut se faire préférentiellement indirectement par l'intermédiaire d'un élément tel que qu'une partie, notamment la partie supérieure, d'une tête de dépose, ou autre élément, ou non préférentiellement directement au robot, notamment à un bras du robot.

Dans cet exemple, comme visible, le système de liaison 4 comporte six éléments de bridage 10. Au niveau de chacun de deux angles diamétralement opposés de la surface supérieure 9, est fixé un seul élément de bridage 10 et au niveau de chacun de deux autres angles diamétralement opposés, sont fixés deux éléments de bridage 10, comme visible sur la figure 1. Dans l'exemple illustré, chaque élément de bridage 10 permet également le centrage de la cassette et est de type pneumatique ou hydraulique, étant actionné par injection d'air ou d'huile. Les éléments de bridage 10 peuvent être tels que les éléments de centrage et bridage commercialisés par la société Halder. Le système de liaison 4 peut être différent sans sortir du cadre de l'invention.

La cassette 1 comporte également dans cet exemple un sous-ensemble de support en rotation 12 porté par la structure réceptrice 2. Plus précisément, le sous-ensemble de support en rotation 12 comporte une pluralité de rouleaux 13, au nombre de quatre dans cet exemple, présents deux à deux en fond de gorge 8 du côté intérieur des montants latéraux 5 et 6. Ils sont configurés pour supporter le poids de la bobine et accompagner la rotation de celle-ci.

La cassette 1 comporte également dans cet exemple un sous-ensemble 24 de guidage du tissu 15 fixé au cadre 3 reliant les montants latéraux 5 et 6 du côté opposé au montant avant 7. Le sous-ensemble 24 est fixé sur la surface inférieure 16 de la structure réceptrice 2, comme visible sur la figure 1, à une extrémité des montants latéraux 5 et 6 opposée à celle qui les relie au montant avant 7. Le sous-ensemble de guidage du tissu 15 est agencé pour guider le tissu en renfort fibreux lors du déroulement de la bobine et comporte, dans cet exemple, une pluralité de rouleaux 17 portés par un axe 18 et mobiles en rotation autour de cet axe 18, l'axe 18 étant parallèle au montant avant 7 et à l'axe de rotation X de la bobine.

Le sous-ensemble de guidage 15 comporte également une pluralité de guides sous forme de plaques 19, disposées sensiblement verticalement, parallèlement à l'axe de rotation X de la bobine, dont une plaque légèrement incurvée, comme visible sur la figure 4, de manière à guider le tissu T visible sur la figure 4.

On a représenté sur la figure 5 un exemple de mandrin expansible 20 pouvant être emmanché sur l'axe, notamment en carton, de la bobine lors de l'installation de celle-ci sur la cassette 1. L'extrémité 21 du mandrin 20 illustré sur cette figure peut reposer par exemple dans une des gorges 8 de la cassette 1 de la figure 1. Lors de la mise en place du mandrin 20, une fois celui-ci emmanché sur l'axe de la bobine, le mandrin 20 est prévu pour être expansé au repos, l'air comprimé le rétractant. Le mandrin 20 augmente ainsi son volume une fois qu'il n'y a plus d'air, afin de se fixer à l'axe de la bobine. Bien entendu, un tel mandrin 20 est alors prévu pour chacune des extrémités latérales de l'axe de la bobine.

La cassette 1 comporte également dans cet exemple un sous-ensemble de mesure 22 configuré pour mesurer la longueur de déroulement de la bobine et/ou contrôler la vitesse de défilement du tissu T. Pour ce faire, le sous-ensemble de mesure 22 comporte un capteur de mesure de la longueur de déroulement de la bobine et/ou un capteur de contrôle de la vitesse de défilement du tissu T en renfort fibreux. Un seul capteur sans contact peut jouer ces deux rôles de mesure et de contrôle, de type utilisant la technologie Doppler ou une roue codeuse appliquée sur le tissu. Une équerre-support 23 est prévue dans cet exemple afin de le maintenir sur la cassette 1.

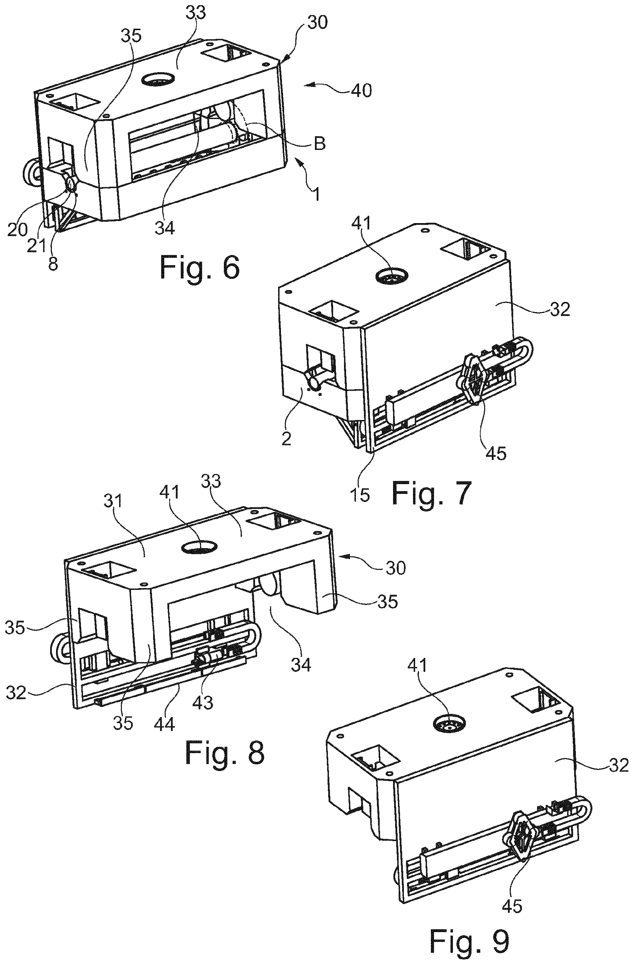

La cassette 1 est destinée à être solidarisée avec une partie supérieure de tête de dépose 30 pour former la tête de dépose 40 conforme à l'invention, visible sur les figures 6 et 7. Le rôle de la partie supérieure de tête de dépose 30 dans cet exemple est de former un couvercle de la cassette, recouvrant ainsi la bobine, de relier la cassette 1 au robot, et également de porter plusieurs éléments décrits ci-après pour la mise en place du tissu T, sa découpe, le positionnement d'un adhésif sur le tissu ou sur le support de drapage.

Sur ces figures, on a représenté la tête de dépose 40 logeant la bobine B de tissu T en renfort fibreux avec le mandrin 20 dont on voit l'extrémité 21 reposant dans la gorge 8 de la cassette 1.

La partie supérieure de tête de dépose 30 est visible isolément sur les figures 8 et 9. La partie supérieure 30 comporte une structure 31 avec des montants 35 venant s'étendre dans le prolongement au-dessus de celle-ci et formant le couvercle 33 de la structure réceptrice du dispositif 1. Contrairement à la cassette 1, elle ne comporte pas d'ouverture centrale 11 définie par le cadre 3 pour permettre le positionnement et le déroulement de la bobine, mais une partie supérieure pleine logeant les moyens de connexion 41 au robot. La partie supérieure de tête 30 ménage néanmoins un espace intérieur 34 pour loger le haut de la bobine.

La partie supérieure de tête de dépose 30 comporte des moyens de bridage complémentaires au système de liaison 4 de la cassette 1, de manière à solidariser de manière amovible la cassette 1 et la partie supérieure de tête 30 afin de former la tête de dépose 40. Les moyens de bridage complémentaires sont non visibles sur les figures dans un souci de clarté du dessin. Ils peuvent chacun consister en une bague comportant une gorge dans laquelle le système de liaison vient se serrer, par exemple à l'aide de billes du système de liaison qui viennent se loger dans la gorge. En desserrant les billes, le système de liaison se désolidarise des moyens de bridage complémentaires.

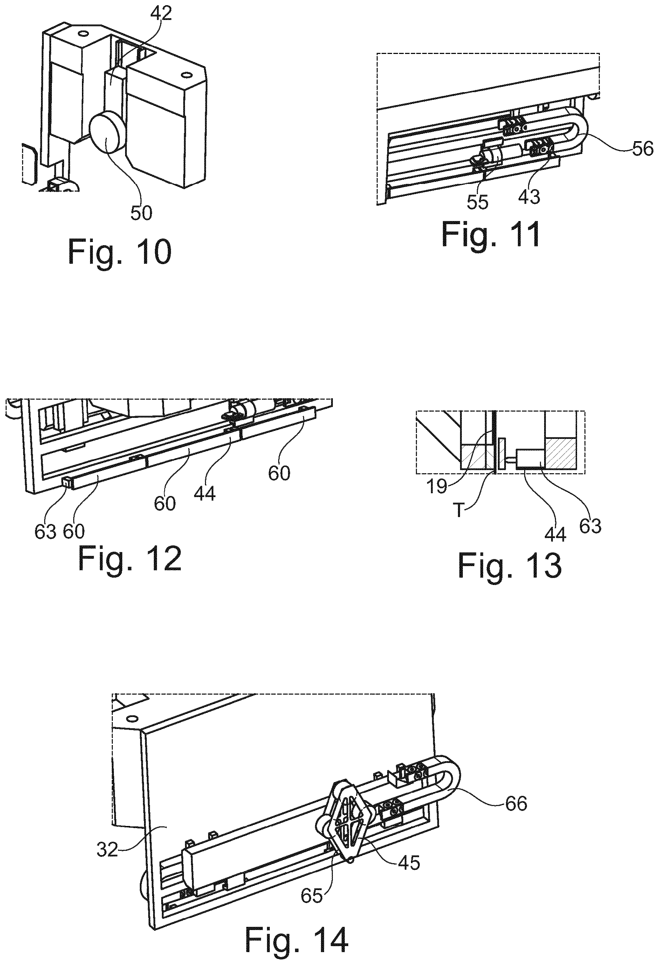

La tête de dépose 40 comporte, dans la partie supérieure de tête 30, dans cet exemple, un système d'entraînement en rotation de la bobine 42, représenté sur la figure 10, un système de découpe 43 visible sur la figure 11, un élément presseur 44 visible sur les figures 12 et 13, ainsi qu'un système de dépose d'un adhésif 45 visible sur la figure 14.

Une platine 32 est fixée sensiblement verticalement à l'arrière de la partie supérieure de tête 30 et recouvre le montant arrière 24 de la cassette 1. Elle porte à la fois le système de découpe 43, l'élément presseur 44 et le système de dépose d'un adhésif 45, dans ce mode de réalisation. Le système de dépose d'un adhésif 45, visible isolément sur la figure 14, est fixé également sur la platine 32 sur une face arrière de celle-ci, tandis que le système de découpe 43 est fixé sur une partie intérieure de celle-ci, de même que l'élément presseur 44, comme visible.

Le système d'entraînement en rotation de la bobine 42 permet d'asservir la rotation de la bobine. Il gère la vitesse de sortie du tissu T de la tête de dépose 40 et assure son immobilisation lorsque cela est nécessaire. Il comporte une roue 50 permettant d'entraîner par friction l'axe de rotation X de la bobine B. Le système d'entraînement en rotation 42 comporte un chariot de guidage 51, un moteur d'entraînement et un vérin pneumatique. On peut asservir le déroulement de la bobine B au déplacement du robot lors de la phase de dépose du tissu pour le drapage, comme cela sera expliqué plus loin.

Le système de découpe 43 du tissu de la bobine, visible sur la figure 11, comporte un coupeur circulaire, dans cet exemple un coupeur circulaire portatif 55, une chaîne porte-câble 56 et un vérin sans tige 57. Le système de découpe 43, comme visible sur la figure 7 notamment, vient recouvrir extérieurement et s'étendre parallèlement au système de guidage du tissu 15 de la cassette 1.

L'élément presseur 44 est prévu pour retenir le tissu T pendant la découpe de celui-ci et permettre de maîtriser la fin de la dépose de lé de tissu T lors du drapage. Dans l'exemple illustré, l'élément presseur 44 comporte trois plaques de pressage 60 juxtaposées et reliées par une pluralité de vérins 63, comme visible notamment sur la figure 13, afin de venir presser le tissu contre une partie inférieure d'une plaque 19 du sous-ensemble de guidage du tissu 15.

Comme visible sur les figures 4 et 13, le tissu T se déroulant de la bobine B est ainsi guidé à l'extérieur du montant arrière 24 dans un espace entre le sous-ensemble de guidage du tissu 15 d'une part et le système de découpe 43 et l'élément presseur 44 d'autre part.

Le système de dépose d'un adhésif 45 comporte un rouleau d'adhésif, par exemple double face, permettant de déposer cet adhésif sur le tissu T de renfort fibreux ou sur le support pour le drapage. Le système de dépose d'un adhésif 45 comporte une tête d'adhésif 65, un chariot de déplacement 66 de la tête d'adhésif ainsi qu'un vérin représenté sous forme d'un rectangle, pour le pressage de la tête d'adhésif 65 contre le support de drapage 116 ou le tissu T. Le système de dépose d'un adhésif peut être du type SAERfix^{®} commercialisé par la société SAERTEX.

Dans l'installation 100, la traverse 113 est représentée de manière isolée sur la figure 16 et comporte une structure de pont avec deux pieds 125 prévus pour pouvoir coulisser sur le banc 114.

Le robot 110 représenté isolément sur la figure 17 comporte un socle 112 reposant sur la traverse 113 et un bras 111 mobile selon six axes de rotation et dont l'extrémité 126 comporte des moyens de connexion configurés pour s'accoupler aux moyens de connexion 41 de la tête de dépose 40.

L'installation 100 peut comporter en outre, comme illustré, deux espaces de stockage 115 aux deux extrémités de la ligne de drapage. Chaque espace de stockage 115 présente deux zones permettant chacune de stocker une cassette 1 dans cet exemple, comme visible. Les cassettes 1 sont représentées prêtes à être chargées sur la tête de dépose 40. L'espace de stockage 115 a été illustré sur la figure 19, comportant deux cassettes 1 identiques à celle représentée sur la figure 1 et pourvues chacune d'une bobine B de tissu T, prêtes à être chargées. Chaque zone de l'espace de stockage 115 comporte également, pour porter les cassettes 1, un berceau de support 140.

L'installation 100 comporte en outre un support de dépose 116, formé par une pluralité de tables 117 fixes représentées isolément sur la figure 18 et portant chacune un cadre 118. Les tables 117 sont par exemple au nombre de quatre. Le support de dépose 116 est disposé sur la ligne de drapage se trouvant sous la traverse 113 lorsque celle-ci se déplace selon la direction D pour le drapage du tissu en renfort fibreux. La table 117 comporte un châssis 130 rectangulaire muni de quatre pieds 131 à ses angles et portant le cadre 118, lequel supporte un matelas martyr 132 pour la réalisation de coutures.

Un deuxième robot 120 présent dans l'installation 100 est porté également par le banc 114 et pouvant se déplacer selon la direction D. Le robot 120 est utilisé pour déposer des inserts, notamment des inserts en mousse de PET ou des tissus unidirectionnels de carbone, sur la préforme avant et/ou après drapage et/ou pour porter une tête de couture afin de réaliser au moins une couture sur la préforme.

Pour une opération de drapage, on peut procéder comme suit à l'aide de l'installation 100.

On charge le robot 110 avec une cassette 1, dans cet exemple en le reliant à l'aide du système de liaison 4 à la partie supérieure de tête 30. La cassette 1 est chargée d'une bobine B de tissu T en renfort fibreux, par exemple en NCF.

Le procédé consiste ensuite à commander le robot 110 pour positionner la cassette 1 au-dessus du support de dépose 116 puis à déplacer le robot 110 selon la direction de drapage D et commander le déroulement simultané de la bobine B pour réaliser la préforme souhaitée.

L'ensemble des éléments de la tête de dépose 40 peuvent être utilisés pour fixer un adhésif sur le tissu T ou le support 116, couper le tissu à la longueur désirée notamment.

Une fois que la cassette 1 a sa bobine vidée ou presque vidée en tissu T, ou en cas de besoin de changement de type de bobine ou de tissu, notamment pour changer de renfort fibreux ou de dimensions, il est possible, selon le procédé de rechargement en cassette 1 selon l'invention, de commander le robot 110 portant la première cassette 1 pour décharger celle-ci, par exemple dans l'espace de stockage 115 à l'aide du système de liaison 4 de la cassette 1 en désolidarisant celle-ci de la tête de dépose 40. On commande alors le robot afin de charger une deuxième cassette 1 présente sur le berceau de support 140 dans l'espace de stockage 115 en solidarisant la deuxième cassette 1 à l'aide de son système de liaison 4 au reste de la tête de dépose 40. L'ensemble de l'installation 100 est alors prêt pour un nouveau drapage.

Pendant la réalisation du drapage ou à un autre moment, il est possible de préparer une cassette 1 en réalisant les étapes suivantes, à savoir :
- positionner la bobine B sur la structure réceptrice 2 de la cassette 1, en manipulant, notamment simultanément, les deux extrémités de l'axe de la bobine B, et
- placer la cassette 1 dans l'espace de stockage 115, notamment sur un berceau de support 140.

Le procédé peut encore comporter l'étape consistant à insérer un mandrin, notamment expansible, à chaque extrémité de l'axe, notamment en carton, de la bobine B de tissu T en renfort fibreux, avant de positionner la bobine B sur la structure réceptrice 2. Le procédé peut encore comporter l'étape consistant à régler la longueur de renfort fibreux déroulé de la bobine B par rapport au sous-ensemble de guidage de tissu 15, après le positionnement de la bobine B sur la structure réceptrice 2.

C'est ainsi que les cassettes 1 illustrées sur la figure 19 dans l'espace de stockage 115 sont préparées avec le tissu T légèrement déroulé à l'extérieur du sous-ensemble de guidage du tissu 15, comme visible.

L'invention n'est pas limitée aux exemples qui viennent d'être décrits.

En particulier, la cassette 1 peut être reliée directement au robot, et/ou porter un des éléments décrits dans le mode de réalisation illustré comme étant portés par la tête de dépose 40, par exemple le système d'entraînement en rotation de la bobine ou autre élément.

L'installation peut comporter un robot pour porter une cassette, qui peut être ou non dépourvue de système de liaison, et au moins un espace de stockage comportant au moins deux zones pour recevoir chacune une cassette. Dans ce cas, le robot peut comporter des moyens de préhension de la cassette.

La cassette peut être prévue pour loger plusieurs bobines, différentes ou identiques entre elles.

Le robot peut être différent ou être agencé sur une installation assurant différemment sa mobilité relativement à la ligne de dépose de type portique associé à un chariot et un coulant, sans sortir du cadre de l'invention.

## Revendications

1. Cassette (1) d'au moins un renfort fibreux enroulé en au moins une bobine (B) de tissu (T) afin de réaliser un drapage pour la fabrication d'une préforme sèche, comportant :
- une structure réceptrice (2) agencée pour recevoir ladite au moins une bobine (B) et permettre de la dérouler,
- un système de liaison (4) pour la fixation amovible de la cassette à une partie de tête de dépose (40), elle-même apte à être reliée à un robot (110) de drapage.

2. Cassette selon la revendication 1, comportant un sous-ensemble de support en rotation (12) porté par la structure réceptrice (2).

3. Cassette selon la revendication 1 ou 2, comportant un sous-ensemble (24) de guidage (15) du tissu en renfort fibreux porté par la structure réceptrice (2) et agencé pour guider le tissu (T) lors du déroulement de la bobine (B).

4. Cassette selon l'une quelconque des revendications précédentes, la structure réceptrice (2) présentant une surface supérieure (9) configurée pour recevoir un axe de la bobine, notamment une surface supérieure (9) avec deux reliefs en creux (8) pour recevoir des extrémités (21) de l'axe de la bobine ou d'au moins un mandrin (20) portant la bobine (B).

5. Cassette selon l'une quelconque des revendications précédentes, comportant un sous-ensemble de mesure (22), configuré pour mesurer la longueur de déroulement de la bobine (B) et/ou pour contrôler la vitesse de défilement du tissu (T) en renfort fibreux, ledit sous-ensemble de mesure (22) comportant de préférence au moins un capteur de mesure de la longueur de déroulement de la bobine (B) et/ou un capteur de contrôle de la vitesse de défilement du tissu en renfort fibreux.

6. Cassette selon la revendication 3, le sous-ensemble de guidage du tissu (15) comportant au moins un rouleau (17) et/ou au moins une plaque (19) configuré(s) pour diriger le tissu en renfort fibreux lors du déroulement de la bobine.

7. Tête de dépose (40) pour le drapage d'au moins un renfort fibreux enroulé sous forme de tissu (T) en au moins une bobine (B) pour la fabrication d'une préforme sèche, comportant :
- une première partie, notamment supérieure, de tête de dépose (30),
- une cassette (1) selon l'une quelconque des revendications précédentes, la cassette (1) étant disposée dans une deuxième partie, notamment inférieure, de la tête de dépose (40) et reliée par le système de liaison (4) à la première partie de tête de dépose (30),
- des moyens de connexion (41) au robot (110), et
- de préférence au moins un élément choisi dans le groupe constitué par un système d'entraînement en rotation de la bobine (42), un système de découpe de la bobine (43), un élément presseur (44) et un système de dépose d'un adhésif (45).

8. Installation (100) pour le drapage de préformes sèches en renfort fibreux sur un support de dépose, comportant au moins un robot (110) portant une tête de dépose (40) selon la revendication 7.

9. Installation selon la revendication précédente, comportant une traverse (113) de support du robot (110) montée sur un banc (114) pour permettre un déplacement du robot (110), selon un axe longitudinal parallèle à une direction de drapage (D).

10. Installation selon l'une des deux revendications immédiatement précédentes, comportant au moins un espace de stockage (115) accessible au robot (110), le ou chaque espace de stockage (115) comportant au moins deux zones pour recevoir chacune une cassette (1) et, dans chaque zone, un berceau de support (140) pour recevoir une cassette (1).

11. Procédé de drapage d'une préforme sèche en renfort fibreux sur un support de dépose, à l'aide de l'installation (100) selon l'une quelconque des revendications 8 à 10, comportant les étapes suivantes :
- charger le robot (110) avec une cassette (1) portant au moins une bobine (B) de tissu (T) en renfort fibreux,
- commander le robot pour positionner la tête de dépose au-dessus du support de dépose,
- déplacer le robot (110) selon une direction de drapage (D) et commander le déroulement simultané de la bobine (B) pour réaliser la préforme.

12. Procédé selon la revendication précédente, comprenant l'étape consistant à charger une nouvelle cassette sur le robot après drapage de chaque pli et avant drapage du pli suivant.

13. Procédé de rechargement en cassette (1) à l'aide d'une installation (100) selon la revendication 10, comportant les étapes consistant à :
- commander le robot (110) portant une première cassette (1) pour décharger celle-ci, notamment à l'aide du système de liaison (4) de la première cassette (1), et
- commander le robot (110) pour charger une deuxième cassette (1) présente dans l'espace de stockage (115), notamment à l'aide du système de liaison (4) de la deuxième cassette (1).

14. Procédé selon la revendication 13, le procédé étant mis en oeuvre après drapage de chaque pli et avant drapage du pli suivant.

15. Procédé de préparation d'une cassette (1) selon l'une quelconque des revendications 1 à 6, comportant les étapes suivantes :
- positionner au moins une bobine (B) de tissu (T) en renfort fibreux sur la structure réceptrice (2) de la cassette (1),
- placer la cassette (1) dans un espace de stockage (115).

## Patentansprüche

1. Kassette (1) mit mindestens einer Faserverstärkung, die auf mindestens eine Spule (B) mit Gewebe (T) aufgewickelt ist, um eine Drapierung zur Herstellung eines trockenen Vorformlings auszuführen, umfassend:
- eine Aufnahmestruktur (2), die dazu ausgebildet ist, die mindestens eine Spule (B) aufzunehmen und ihr Abwickeln zu ermöglichen,
- ein Verbindungssystem (4) zur lösbaren Befestigung der Kassette an einem Legekopfteil (40), der wiederum geeignet ist, mit einem Legeroboter (110) verbunden zu werden.

2. Kassette nach Anspruch 1, umfassend eine Unterbaugruppe zur Drehlagerung (12), die von der Aufnahmestruktur (2) getragen wird.

3. Kassette nach Anspruch 1 oder 2, umfassend eine Unterbaugruppe (24) zum Führen (15) des Gewebes aus Faserverstärkung, die von der Aufnahmestruktur (2) getragen wird und dazu ausgebildet ist, das Gewebe (T) beim Abwickeln der Spule (B) zu führen.

4. Kassette nach einem der vorhergehenden Ansprüche, wobei die Aufnahmestruktur (2) eine obere Fläche (9) aufweist, die dazu ausgestaltet ist, eine Achse der Spule aufzunehmen, insbesondere eine obere Fläche (9) mit zwei vertieften Reliefs (8) zum Aufnehmen der Enden (21) der Achse der Spule oder mindestens eines die Spule (B) tragenden Dorns (20).

5. Kassette nach einem der vorhergehenden Ansprüche, umfassend eine Messunterbaugruppe (22), die dazu ausgestaltet ist, die Abwickellänge der Spule (B) zu messen und/oder die Ablaufgeschwindigkeit des Gewebes (T) aus Faserverstärkung zu überwachen, wobei die Messunterbaugruppe (22) bevorzugt mindestens einen Sensor zum Messen der Abwickellänge der Spule (B) und/oder einen Sensor zum Überwachen der Ablaufgeschwindigkeit des Gewebes aus Faserverstärkung umfasst.

6. Kassette nach Anspruch 3, wobei die Unterbaugruppe zum Führen des Gewebes (15) mindestens eine Rolle (17) und/oder mindestens eine Platte (19) umfasst, die dazu ausgestaltet ist(sind), das Gewebe aus Faserverstärkung beim Abwickeln der Spule zu lenken.

7. Legekopf (40) zum Drapieren mindestens einer Faserverstärkung, die in Form von Gewebe (T) auf mindestens eine Spule (B) aufgewickelt ist, zur Herstellung eines trockenen Vorformlings, umfassend:
- einen ersten, insbesondere oberen, Legekopfteil (30),
- eine Kassette (1) nach einem der vorhergehenden Ansprüche, wobei die Kassette (1) in einem zweiten, insbesondere unteren, Teil des Legekopfs (40) angeordnet ist und durch das Verbindungssystem (4) mit dem ersten Legekopfteil (30) verbunden ist,
- Kopplungsmittel (41) zum Koppeln an den Roboter (110) und
- bevorzugt mindestens ein Element, das aus der Gruppe gewählt ist, die aus einem Drehantriebssystem der Spule (42), einem Schneidsystem der Spule (43), einem Andrückelement (44) und einem Klebstoffauftragsystem (45) besteht.

8. Anlage (100) zum Drapieren von trockenen Vorformlingen aus Faserverstärkung auf einem Legeträger, umfassend mindestens einen Roboter (110), der einen Legekopf (40) nach Anspruch 7 trägt.

9. Anlage nach dem vorhergehenden Anspruch, umfassend eine Traverse (113) zum Stützen des Roboters (110), die auf einem Gestell (114) montiert ist, um ein Bewegen des Roboters (110) entlang einer parallel zu einer Drapierrichtung (D) verlaufenden Längsachse zu ermöglichen.

10. Anlage nach einem der beiden unmittelbar vorhergehenden Ansprüche, umfassend mindestens einen Speicherbereich (115), der für den Roboter (110) erreichbar ist, wobei der oder jeder Speicherbereich (115) mindestens zwei Zonen zum Aufnehmen von jeweils einer Kassette (1) und, in jeder Zone, ein Lagergestell (140) zum Aufnehmen einer Kassette (1) umfasst.

11. Verfahren zum Drapieren eines trockenen Vorformlings aus Faserverstärkung mithilfe der Anlage (100) nach einem der Ansprüche 8 bis 10, umfassend die folgenden Schritte:
- Beladen des Roboters (110) mit einer Kassette (1), die mindestens eine Spule (B) mit Gewebe (T) aus Faserverstärkung trägt,
- Steuern des Roboters, um den Legekopf über dem Legeträger zu positionieren,
- Bewegen des Roboters (110) entlang einer Drapierrichtung (D) und Steuern des gleichzeitigen Abwickelns der Spule (B), um den Vorformling auszuführen.

12. Verfahren nach dem vorhergehenden Anspruch, umfassend den Schritt, der darin besteht, nach dem Drapieren jeder Lage und vor dem Drapieren der folgenden Lage eine neue Kassette auf den Roboter zu laden.

13. Verfahren zum Nachladen von Kassetten (1) mithilfe einer Anlage (100) nach Anspruch 10, umfassend die Schritte, die darin bestehen:
- den Roboter (110), der eine erste Kassette (1) trägt, zu steuern, um diese zu entladen, insbesondere mithilfe des Verbindungssystems (4) der ersten Kassette (1), und
- den Roboter (110) zu steuern, um eine zweite Kassette (1) zu laden, die sich in dem Speicherbereich (115) befindet, insbesondere mithilfe des Verbindungssystems (4) der zweiten Kassette (1).

14. Verfahren nach Anspruch 13, wobei das Verfahren nach dem Drapieren jeder Lage und vor dem Drapieren der folgenden Lage ausgeführt wird.

15. Verfahren zur Herstellung einer Kassette (1) nach einem der Ansprüche 1 bis 6, umfassend die folgenden Schritte:
- Positionieren mindestens einer Spule (B) mit Gewebe (T) aus Faserverstärkung auf der Aufnahmestruktur (2) der Kassette (1),
- Platzieren der Kassette (1) in einen Speicherbereich (115) .

## Claims

1. Cassette (1) of at least one fibrous reinforcement wound into the form of at least one roll (B) of fabric (T) in order to carry out laying up for the manufacture of a dry preform, comprising:
- a receiving structure (2) adapted to receive said at least one roll (B) and enabling it to be unwound,
- a connecting system (4) for removably fixing the cassette to a laying head part (40) itself adapted to be connected to a laying up robot (110).

2. Cassette according to Claim 1, comprising a rotational support subassembly (12) carried by the receiving structure (2).

3. Cassette according to Claim 1 or 2, comprising a subassembly (24) for guiding (15) the fibrous reinforcement fabric carried by the receiving structure (2) and adapted to guide the fabric (T) during unrolling of the roll (B).

4. Cassette according to any one of the preceding claims, the receiving structure (2) having an upper surface (9) configured to receive a core of the roll, in particular an upper surface (9) with two recessed patterns (8) for receiving ends (21) of the core of the roll or of at least one mandrel (20) carrying the roll (B) .

5. Cassette according to any one of the preceding claims, comprising a measuring subassembly (22) configured to measure the length unwound from the roll (B) and/or to monitor the speed at which the fibrous reinforcement fabric (T) is fed, said measuring subassembly (22) preferably comprising at least one sensor for measuring the length unwound from the roll (B) and/or a sensor for monitoring the speed at which the fibrous reinforcement fabric is fed.

6. Cassette according to Claim 3, the subassembly (15) for guiding the fabric comprising at least one roller (17) and/or at least one plate (19) configured to direct the fibrous reinforcement fabric during unrolling of the roll.

7. Laying head (40) for laying up at least one fibrous reinforcement wound in the form of fabric (T) into the form of at least one roll (B) for the manufacture of a dry preform, comprising:
- a first part (30), in particular an upper part, of the laying head,
- a cassette (1) according to any one of the preceding claims, the cassette (1) being disposed in a second part, in particular a lower part, of the laying head (40) and connected by the connecting system (4) to the first part (30) of the laying head,
- means (41) for connection to the robot (110), and
- preferably at least one element chosen from the group constituted by a system (42) for driving the roll in rotation, a system (43) for cutting the roll, a pressing element (44) and a system (45) for depositing an adhesive.

8. Installation (100) for laying up dry fibrous reinforcement preforms on a laying up support, comprising at least one robot (110) carrying a laying head (40) according to Claim 7.

9. Installation according to the preceding claim, comprising a crossmember (113) for supporting the robot (110) mounted on a bench (114) to enable movement of the robot (110) along a longitudinal axis parallel to a laying up direction (D).

10. Installation according to either one of the two immediately preceding claims, comprising at least one storage space (115) accessible to the robot (110), the or each storage space (115) comprising at least two zones each for receiving a cassette (1) and, in each zone, a support cradle (140) for receiving a cassette (1).

11. Method for laying up a dry fibrous reinforcement preform on a laying up support using the installation (100) according to any one of Claims 8 to 10, comprising the following steps:
- loading the robot (110) with a cassette (1) carrying at least one roll (B) of fibrous reinforcement fabric (T),
- commanding the robot to position the laying head over the laying up support,
- moving the robot (110) in a laying up direction (D) and commanding simultaneous unrolling of the roll (B) to produce the preform.

12. Method according to the preceding claim, comprising the step consisting in loading a new cassette onto the robot after laying up each lay and before laying up the next lay.

13. Method for reloading a cassette (1) using an installation (100) according to Claim 10, comprising the steps consisting in:
- commanding the robot (110) carrying a first cassette (1) to offload the latter, in particular with the aid of the connecting system (4) of the first cassette (1), and
- commanding the robot (110) to load a second cassette (1) present in the storage space (115), in particular with the aid of the connecting system (4) of the second cassette (1).

14. Method according to Claim 13, the method being executed after laying up each lay and before laying up the next lay.

15. Method for preparing a cassette (1) according to any one of Claims 1 to 6, comprising the following steps:
- positioning at least one roll (B) of fibrous reinforcement fabric (T) on the receiving structure (2) of the cassette (1),
- placing the cassette (1) in a storage space (115).
